Europäisches Patentamt

European Patent Office

Office européen des brevets

(19)

(11) Veröffentlichungsnummer: **0 225 980**
**B1**

(12) **EUROPÄISCHE PATENTSCHRIFT**

(45) Veröffentlichungstag der Patentschrift: **22.08.90**

(51) Int. Cl.⁵: **F 02 B 23/08**

(21) Anmeldenummer: **86113773.5**

(22) Anmeldetag: **04.10.86**

(54) Gemischverdichtende Brennkraftmaschine, insbesondere fremdgezündete Viertaktbrennkraftmaschine.

(30) Priorität: **05.12.85 DE 3542965**

(43) Veröffentlichungstag der Anmeldung:
**24.06.87 Patentblatt 87/26**

(45) Bekanntmachung des Hinweises auf die Patenterteilung:
**22.08.90 Patentblatt 90/34**

(84) Benannte Vertragsstaaten:
**DE ES FR GB IT SE**

(56) Entgegenhaltungen:
**EP-A-0 101 969
DE-A-2 359 058
DE-A-2 548 134
DE-C-2 731 086
FR-A-2 487 425
GB-A-1 521 957
US-A-4 354 463**

(73) Patentinhaber: **FORD-WERKE AKTIENGESELLSCHAFT
Werk Köln-Niehl Henry-Ford-Strasse Postfach 60 40 02
D-5000 Köln 60 (DE)**
(84) **DE IT SE**

(73) Patentinhaber: **FORD MOTOR COMPANY LIMITED
Eagle Way
Brentwood Essex CM13 3BW (GB)**
(84) **GB**

(73) Patentinhaber: **FORD FRANCE SOCIETE ANONYME
344 Avenue Napoléon Bonaparte B.P. 307
F-92506 Rueil Malmaison Cedex (FR)**
(84) **FR**

(73) Patentinhaber: **Ford Motor Company
One Parklane Boulevard Parklane Towers East
Dearborn Michigan 48126 (US)**
(84) **ES**

(72) Erfinder: **Cloke, Martin
Rm. S-2101 Scientific Research Lab P.O. Box 2053
Dearborn, Michigan 48121-2053 (US)**

Courier Press, Leamington Spa, England.

EP 0 225 980 B1

**EP 0 225 980 B1**

Erfinder: **Menne, Rudolf, Dr.**
**Am Zaarshäuschen 27**
**D-5060 Bergisch Gladbach 1 (DE)**
Erfinder: **Horton, Michael**
**Golzheimerweg 4**
**D-5014 Kerpen (DE)**
Erfinder: **Stwiorok, Andreas**
**Sportstrasse 17**
**D-5000 Köln 60 (DE)**

(74) Vertreter: **Ritzkowsky, Harald, Dipl.-Ing.**
**Ford-Werke Aktiengesellschaft Patentabteilung**
**NH/DRP Henry-Ford-Strasse**
**D-5000 Köln 60 (DE)**

## Beschreibung

Gemischverdichtende, fremdgezündete Vier-takt-Brennkraftmaschine

Die Erfindung bezieht sich auf eine gemischver-dichtende, fremdgezündete Viertakt-Brennkraft-maschine mit einer im Zylinderkopf ausgebildeten Brennraummulde, der im Oberbegriff des Patentanspruches erläuterten Art.

Aus der FR-A-2,487,425 ist eine gemischver-dichtende, fremdgezündete Viertakt-Brennkraft-maschine mit einer im Zylinderkopf ausgebildeten Brennraummulde der im Oberbegriff des Patentanspruches erläuterten Art bekannt.

Bei der dort beschriebenen Brennraumform wird darauf hingewiesen, daß die durch die dem Einlaßventil benachbarte Führungswand bewirkte Gemisch-Drallströmung in Richtung auf die Zündkerze hin verläuft und daß das durch die Zündkerze entzündete, brennende Gemisch durch eine in Strömungsrichtung nachfolgende Führungsmulde weitergeleitet wird, damit die Flammausbreitung über den durch die Absenkung behinderten Bereich hinaus sichergestellt wird. Der Zündkerze gegenüberliegend ist in der Brennraumdecke eine konkave Auswölbung vorgesehen, die während des Einlaßtaktes die Ausbildung der Gemisch-Drallströmung unterstützen soll.

Die bekannte Brennraumform sorgt zwar während des Einlaßtaktes für die Ausbildung einer Gemisch-Drallströmung, diese wird jedoch während des darauffolgenden Kompressionstaktes nicht weiter unterstützt, so daß sie sich durch den zunehmenden Druck und die zunehmende Wandreibung abschwächt.

Die Aufgabe der Erfindung ist es, einen Brennraum der im Oberbegriff des Patentanspruches erläuterten Art derart zu verbessern, daß die sich während des Ansaugtaktes ausbildende Gemisch-Drallströmung auch während des nachfolgenden Kompressionstaktes aufrechterhalten und stabilisiert wird. Dadurch kann die Magergemischgrenze bis auf ein Lambda gleich 1,6 erhöht werden.

Gemäß der Erfindung wird diese Aufgabe gelöst, indem bei einem Brennraum der im Oberbegriff des Patentanspruches erläuterten Art die im Kennzeichenteil des Patentanspruches aufgezeigte Merkmale angewendet werden.

Dadurch, daß die Absenkung der Brennraumdecke die Einlaß-Ventilöffnung mit einer Spaltbreite zum Einlaßventil von 1 bis 1,5 mm und einer Höhe von 70 bis 100 % des Ventilhubes maskiert und daß ein der Zündkerze gegenüberliegender Quetschbereich vorgesehen ist, der 5 bis 15 % des Zylinderquerschnittes beträgt, wird die sich durch die Maskierung des Einlaßventiles ausbildende Gemisch-Drallströmung zum Ende des Kompressionstaktes durch eine sich durch die Quetschwirkung ausbildende Querströmung in Richtung auf die Zündkerze hin überlagert und diese hierdurch in der Zylindermitte stabilisiert und verstärkt.

Durch die erfindungsgemäße Stabilisierung der Gemisch-Drallströmung kann auch noch bei extrem magerer Gemischaufbereitung im Bereich von Lambda bis 1,6 noch ein stabiler Verbrennungsablauf erzielt werden, der durch einen hohen Ausbrenngrad zu einer günstigen Abgaszusammensetzung beiträgt.

Gegebenenfalls können damit geforderte Abgasemissionsgrenzen in einfacherer und billigerer Weise unter Zuhilfenahme von ungeregelten Oxydationskatalysatoren eingehalten werden.

Die Erfindung wird anhand eines in der Zeichnung gezeigten Ausführungsbeispieles näher erläutert. Es zeigt:

Fig. 1 einen vertikalen Schnitt entlang der Linie I-I in Fig 2;

Fig. 2 eine schematische Draufsicht auf den Brennraum von der Unterseite des Zylinderkopfes her gemäß der Erfindung mit in schraffiert angedeuteten Quetschflächen;

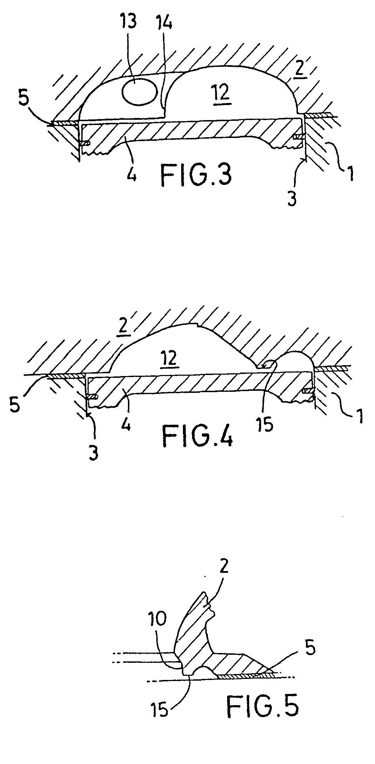

Fig. 3 einen Schnitt entlang der Linie III-III in Fig. 2;

Fig. 4 einen Schnitt entlang der Linie V-V in Fig. 2 und

Fig. 5 einen Teilschnitt entlang der Linie V-V in Fig. 2.

Wie aus dem vertikalen Teilschnitt durch den Brennraum eines Zylinders einer gemischverdich-tenden, fremdgezündeten Viertakt-Brennkraftma-schine zu ersehen ist, ist auf einem Zylinderblock 1 ein Zylinderkopf 2 angeordnet. Im Zylinderblock 1 ist eine Zylinderbohrung 3 ausgebildet, in der ein Kolben 4 auf- und abbewegbar angeordnet ist.

Auf dem Zylinderblock 1 ist unter Zwischenlage einer üblichen Zylinderkopfdichtung 5 der Zylinderkopf 2 angeordnet, der über Ein- und Auslaßventile 6 bzw. 7 gesteuerte Ein- und Auslaßkanäle 8 bzw. 9 aufweist. Die Ein- und Auslaßkanäle 8 und 9 stehen über Ein- bzw. Auslaß-Ventilöffnungen 10 und 11 in Verbindung mit dem Brennraum 12, der den Zylinder 3 nach oben abschließt. In den Brennraum 12 ragt weiterhin eine Zündkerze 13 ein.

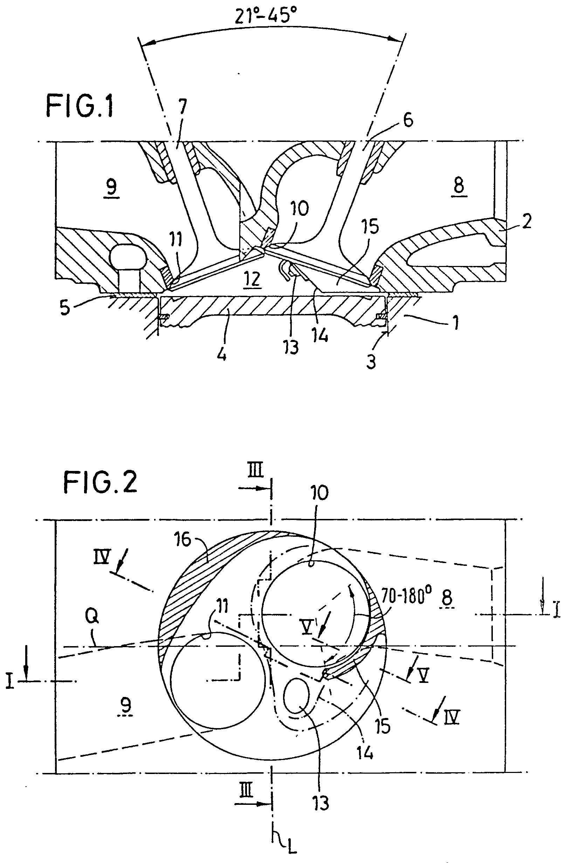

Wie aus Fig. 1 ersichtlich ist, sind die Ventilschäfte in einer Projektion auf eine Zylinderquerebene Q so zueinander geneigt angeordnet, daß sie einen spitzen Winkel zwischen 21 Grad und 45 Grad einnehmen. Die Ventile 6 und 7 können hierbei in an sich bekannter Weise über zwei oben liegende Nokkenwellen oder aber über eine oben-liegende Nockenwelle und entsprechende Kip-phebel betätigt werden.

Wie aus Fig. 2 zu ersehen ist, sind die Ein- und Auslaßventile 6 und 7 derart angeordnet, daß sie in Draufsicht gesehen, gegenüber einer senkrecht zur Motorlängsachse liegenden, durch die Zylinderachse verlaufenden Zylinderquerebene in Motorlängsrichtung gegeneinander versetzt sind. Die Zündkerze 13 ist hierbei auf der dem Einlaßventil 6 benachbarten Seite in einem in den Brennraum 12 vorspringenden Absenkung 14 der Brennraumdecke angeordnet, um die Funkenstrecke möglichst nahe zur Zylindermitte hin zu bringen.

Die Absenkung 14 setzt sich in einer Führungswand 15 fort, die die Einlaß-Ventilöffnung 10 in ihrem stromabwärts liegenden Bereich über einen Winkel von 70 bis 180 Grad umfaßt. Die Führungswand 15 erstreckt sich hierbei über eine Höhe die 70 bis 100 % des Ventilhubes umfaßt und liegt zum Ventilteller des Einlaßventiles 6 mit einer Spaltbreite von 1 bis 1,5 mm im Abstand.

Der Zündkerze 13 gegenüberliegend ist ein Quetschbereich 16, schraffiert dargestellt, vorgesehen, der etwa 5 bis 15 % des Zylinderquerschnittes beträgt.

Der Einlaßkanal 8 beaufschlagt die Einlaß-Ventilöffnung 10 wie aus Fig. 2 ersichtlich ist in tangentialer Richtung.

Die Funktionsweise des erfindungsgemäßen Brennraumes wird nachfolgend erläutert.

Das über den Einlaßkanal 8 bei öffnendem Einlaßventil 6 einströmende Gemisch wird einerseits durch die tangentiale Anordnung des Einlaßkanales 8 mit einer um die Zylinderachse kreisenden Drallströmung eingebracht. Die Führungswand 15, die die Einlaß-Ventilöffnung 10 in ihrem zum Zylinderaußenumfang liegenden Bereich abschirmt bewirkt eine weitere Verstärkung der durch den Einlaßkanal 8 eingeleiteten Drallströmung des Gemisches.

Die durch den tangentialen Einlaßkanal 8 und die Führungswand 15 bewirkte Gemisch-Drallströmung bildet sich während des Ansaugtaktes aus, während des nachfolgenden Kompressionstaktes verlieren diese Maßnahmen jedoch ihre Wirkung.

Um die Gemisch-Drallströmung am Ende des Kompressionstaktes, also kurz vor der Zündung möglichst intensiv aufrechtzuerhalten, ist gemäß der Erfindung der zur Zündkerze 13 gegenüberliegende Quetschbereich 16 von 5 bis 15 % des Zylinderquerschnittes vorgesehen, der zum Ende des Kompressionstaktes seine Quetschwirkung in radialer Richtung entfaltet, die sich mit der um die Zylinderachse drehenden Gemisch-Drallströmung verbindet und durch deren Einschnürung in Richtung auf die Zylindermitte zu einer Erhöhung bzw. Stabilisierung der Drallströmung beiträgt.

Durch diese Erhöhung bzw. Stabilisierung der Gemisch-Drallströmung unmittelbar vor dem Zündzeitpunkt wird das durch die Zündkerze entzündete, brennende Gemisch zügig in Drallrichtung weitergeführt, so daß dieses das eigentlich durch die Führungswand 15 gebildete Hindernis gegen eine günstige Flammausbreitung sicher überwinden kann und ein sicheres Ausbrennen auch magerer Luft-Kraftstoffverhältnisse mit einem Lambda von bis zu 1,6 noch sicherstellt.

Es muß noch darauf hingewiesen werden, daß bei einem Vierzylindermotor die Brennräume abwechselnd in spiegelbildlicher Anordnung vorgesehen werden können, wodurch der eine Einlaßkanal und die entsprechende tangentiale Beaufschlagung der Einlaß-Ventilöffnung nicht wie in Figur gezeigt im Gegenuhrzeigersinn sondern im Uhrzeigersinn drehen.

Weiterhin muß darauf hingewiesen werden, daß selbstverständlich ein Vierzylindermotor mit einem Brennraum gemäß der Erfindung auch in vorteilhafter Weise mit einem Lambda von 1, wie es für den Betrieb mit einem geregelten Katalysator erforderlich ist, angewendet werden kann, da grundsätzlich die günstigen Ausbrenneigenschaften auch bei dieser Lambdazahl für einen geringen Brennstoffverbrauch und eine günstige Abgaszusammensetzung sorgen.

## Patentanspruch

Gemischverdichtende, fremdgezündete Viertakt-Brennkraftmaschine mit

einem durch einen Zylinder (3), einen Kolben (4) und einen Teil eines Zylinderkopfes (2) begrenzten Brennraum (12),

einem Einlaßventil (6) und einem Auslaßventil (7), deren Ventilöffnungen (10, 11) in Draufsicht gegenüber einer senkrecht zur Motorlängsachse liegenden, durch die Zylinderachse verlaufenden Zylinderquerebene (Q) in Motorlängsrichtung versetzt sind, und deren Ventilschäfte in Projektion auf die Zylinderquerebene (Q) einen spitzen Winkel einschließen,

einem Dralleinlaßkanal (8), der die Einlaß-Ventilöffnung (10) tangential beaufschlagt

einer Absenkung (15) der Brennraumdecke, die einen zylinderaußenseitigen Bereich der Einlaß-Ventilöffnung (10) über einen Winkel von 70 Grad bis 180 Grad maskiert,

einer Zündkerze (13), die in der Absenkung (15) der Brennraumdecke, in Draufsicht auf der zur Einlaß-Ventilöffnung (10) liegenden Seite der Motorlängsachse angeordnet ist,

dadurch gekennzeichnet, daß

die Absenkung (15) der Brennraumdecke, die Einlaß-Ventilöffnung (10) mit einer Spaltbreite zum Einlaßventil (8) von 1 bis 1,5 mm und einer Höhe von 70 bis 100 % des Ventilhubes maskiert, und daß

ein der Zündkerze (13) gegenüberliegender Quetschbereich (16) vorgesehen ist, der 5 bis 15 % des Zylinderquerschnittes beträgt.

## Revendication

Moteur à combustion interne à quatre temps, à allumage commandé et à compression d'un mélange, comprenant

une chambre de combustion (12) délimitée par un cylindre (3), par un piston (4) et par une partie d'une culasse (2) de cylindre,

une soupape d'admission (6) et une soupape de sortie (7) dont les orifices d'obturation (10, 11), observés en plan, sont décalés dans le sens longitudinal du moteur par rapport à un plan transversal (Q) du cylindre, s'étendant perpendiculairement à l'axe longitudinal du moteur et passant par l'axe du cylindre, et dont les queues forment un angle aigu en projection sur le plan transversal (Q) du cylindre,

un canal d'admission (8) à effet tourbillonnaire, agissant tangentiellement sur l'orifice (10) d'obturation de la soupape d'admission,

un encaissement (15) du couvercle de la chambre de combustion qui asque, sur un angle de 70 degrés à 180 degrés, une région de l'orifice (10) d'obturation de la soupape d'admission qui est située à l'extérieur du cylindre

une bougie d'allumage (13) disposée dans l'encaissement (15) du couvercle de la chambre de combustion et, observée en plan, du côté de l'axe longitudinal du moteur qui est situé vers l'orifice (10) d'obturation de la soupape d'admission,

caractérisé par le fait que

l'encaissement (15) du couvercle de la chambre de combustion masque l'orifice (10) d'obturation de la soupape d'admission avec une largeur d'interstice comprise entre 1 et 1,5 mm par rapport à la soupape d'admission (6), et selon une hauteur de 70 à 100 % de la course de la soupape; et par

la présence d'une zone resserrée (16) située à l''opposé de la bougie d'allumage (13), et représentant de 5 à 15 % de la section du cylindre.

**Claim**

A mixture-compressing, spark-ignited four-stroke internal combustion engine, having

a combustion chamber (12) bounded by a cylinder (3), a piston (4) and part of a cylinder head (2),

an inlet valve (6) and an exhaust valve (7), the openings (10, 11) of which are offset in plan view in the longitudinal direction of the engine with respect to a transverse plane (Q) of the cylinder lying at right angles to the longitudinal axis of the engine and extending through the cylinder axis and the stems of which form an acute angle when projected onto the transverse plane (Q) of the cylinder,

a swirl inlet port (8) which acts upon the inlet valve opening (10) tangentially,

a lowered portion (15) on the combustion chamber roof, which masks an area of the inlet valve opening (10) on the outside of the cylinder over an angle of between 70° and 180°

a sparking plug (13) which is arranged in the lowered portion (15) on the combustion chamber roof in plan view on the side of the longitudinal axis of the engine facing the inlet valve opening (10), characterized in that

the lowered portion (15) on the combustion chamber roof masks the inlet valve opening (10) with a gap width towards the inlet valve (8) of between 1 and 1.5 mm and a height of between 70 and 100% of the valve stroke, and

a squish area (16) opposite the sparking plug (13) and amounting to between 5 and 15% of the cross-section of the cylinder is provided.

FIG.1

$21^\circ - 45^\circ$

FIG.2

$70 - 180^\circ$

FIG.3

FIG.4

FIG.5